**Europäisches Patentamt**

**European Patent Office**

**Office européen des brevets**

(19)

(11) Veröffentlichungsnummer: **0 105 962**
**A1**

(12) **EUROPÄISCHE PATENTANMELDUNG**

(21) Anmeldenummer: **82109570.0**

(22) Anmeldetag: **16.10.82**

(51) Int. Cl.³: **B 62 D 27/02**

(43) Veröffentlichungstag der Anmeldung: **25.04.84**
**Patentblatt 84/17**

(84) Benannte Vertragsstaaten: **AT BE CH DE FR IT LI**

(71) Anmelder: **Aluminium Press- und Walzwerk Münchenstein AG, Tramstrasse 56-66, CH-4142 Münchenstein 2 (CH)**

(72) Erfinder: **Dräyer, Rudolf, Apfhalterstrasse 15, CH-4132 Muttenz (CH)**

(74) Vertreter: **Patentanwälte Dipl.-Ing. Rudolf Bibrach Dipl.-Ing. Elmar Rehberg, Pütterweg 6 Postfach 738, D-3400 Göttingen (DE)**

(54) **Wand- oder Dachelement, insbesondere zur Erstellung von Fahrzeugaufbauten.**

(57) Ein Wand- oder Dachelement dient insbesondere zur Erstellung von Fahrzeugaufbauten und ist aus V-förmig gekanteten Verkleidungsblechen (3), einer im Querschnitt etwa W-förmigen und Anschlagschenkel (12) aufweisenden Skelettleiste (1) und einer zugehörigen, zwei V-förmige Klemmschenkel (18) aufweisenden Federleiste (2) zusammengesetzt. Durch Schnappanschlusselemente (16, 21) zwischen den Anschlagschenkeln (12) der Skelettleiste (1) und den Klemmschenkeln(18) der Federleiste (2) sind die Ränder (4) der V-förmig gekanteten Verkleidungsfläche (3) fixiert gehalten und gleichzeitig die Federleiste (2) und die Skelettleiste (1) unter Selbsthemmung miteinander verbunden.

Um eine funktionell bessere Ergänzung zwischen Federleiste (2) und Skelettleiste (1) zu erzielen und auch tief abgekantete Verkleidungsbleche (3) verwenden zu können, sind die Anschlagschenkel (12) der Skelettleiste (1) getrennt voneinander mit gegenseitigem Abstand von einem Steg (7) an der Skelettleiste (1) ausgehend, vorgesehen und so angeordnet, dass der von dem Steg (7) und zwei Umfangsschenkeln (9) des Skelettprofils (1) umschlossene Innenraum (13) in drei etwa gleich grosse Teile unterteilt ist, dass die Skelettleiste (1) und die Federleiste (2) in an sich bekannter Weise als Strangpressprofile ausgebildet sind, und dass sowohl die Klemmschenkel (18) der Federleiste (2) als auch die Anschlagschenkel (12) an der Skelettleiste (1) federnd ausgebildet sind und an ihren freien, in den Innenraum (13) abstehenden Enden die Schnappanschlusselemente (16, 21) tragen.

Die Erfindung bezieht sich auf ein Wand- oder Dachelement, insbesondere zur Erstellung von Fahrzeugaufbauten, mit V-förmig gekanteten Verkleidungsblechen, einer im Querschnitt etwa W-förmigen und Anschlagschenkel aufweisenden Skelettleiste und einer zugehörigen, zwei V-förmige Klemmschenkel aufweisenden Federleiste, wobei durch Schnappanschlußelemente zwischen den Anschlagschenkeln der Skelettleiste und den Klemmschenkeln der Federleiste die Ränder der V-förmig gekanteten Verkleidungsbleche fixiert gehalten und gleichzeitig die Federleiste und die Skelettleiste unter Selbsthemmung miteinander verbunden sind. Mit derartigen Wand- oder Dachelementen lassen sich insbesondere Fahrzeugaufbauten im Baukastensystem erstellen, wobei die Skelettleiste und die Federleiste zusammen je einen Träger oder insgesamt dann ein Gerippe bilden und der Zwischenraum zwischen mehreren Trägern durch die Verkleidungsbleche überbrückt wird.

Ein Wand- oder Dachelement der eingangs beschriebenen Art ist aus der DE-PS 878 124 bekannt, wobei die Skelettleiste als Strangpreßprofil und die Federleiste aus einem gebogenen Metallstreifen, beides vorzugsweise aus einer Aluminiumlegierung, bestehen. Die Skelettleiste ist dickwandig und unnachgiebig ausgebildet; die für die Verbindung zwischen Skelettleiste und Federleiste erforderliche Nachgiebigkeit zum Einrasten der Schnappanschlußelemente wird hier ausschließlich durch die vergleichsweise dünnwandige und nachgiebige Ausbildung der Federleiste erreicht. Dies hat den Nachteil, daß die Federleiste nur diese federnden Eigenschaften aufbringt und zur Kraftaufnahme z. B. beim Auftreten von Verschiebungs- oder Verwindungskräften kaum herangezogen werden kann. Diese Kräfte müssen im wesentlichen von der Skelettleiste allein aufgenommen werden. Aus diesem Grunde ist die Skelettleiste mit dickwandigen, in Richtung auf den Innenraum des Fahrzeugaufbaus vorstehenden Rippen versehen, die zur Festigkeit beitragen.

In Verbindung damit finden V-förmig abgekantete Verkleidungsbleche Verwendung, die zur Erreichung einer ausreichenden Eigenstabilität in ihrem flächenhaften Bereich mehrfach druckförmig oder mäanderförmig abgekantet sind, während die V-förmig abgekanteten Ränder nur etwa in halber Tiefe abgekantet sind. Zur Aufnahme von tiefer abgekanteten Rändern der Verkleidungsbleche sind die Skelettleiste und die Federleiste nicht geeignet. Die Skelettleiste weist Anschlagschenkel auf, die im Bereich der die korrespondierenden Teile von Schnappanschlußelementen tragenden Enden zu einem pilzartigen Anschlagknopf vereinigt sind, der in der Symmetrieebene der Leisten und mit geringem Abstand zu einem die Klemmschenkel verbindenden Flanschsteg an der Federleiste vorgesehen ist. Um die Verbindung zwischen Federleiste und Skelettleiste beispielsweise für Reparaturzwecke lösen zu können, muß die Federleiste zerstört, insbesondere der Länge nach aufgetrennt werden. Dies geschieht in der Regel in der Mitte, also entlang der Symmetrieebene, so daß nicht auszuschließen ist, daß dabei auch die Skelettleiste im Bereich der Anschläge für die Schnappanschlußelemente beschädigt wird, wodurch die Skelettleiste unbrauchbar wird und dann ebenfalls ausgetauscht werden muß. Durch die Schnappanschlußelemente wird nicht nur eine Verbindung zwischen der Federleiste und der Skelettleiste unter Selbsthemmung erreicht, sondern auch gleichzeitig die Ränder der gekanteten Verkleidungsbleche festgelegt.

Ein Wand- oder Dachelement jedoch abweichender Art ist aus der EU-PS 8592 oder der DE-OS 28 29 342 bekannt. Dabei sind zwar beide Leisten als Strangpreßprofile ausgebildet, jedoch ist auch hier das Skelettprofil im wesentlichen starr ausgebildet, während die Klemmschenkel an der Federleiste im wesentlichen die Federungseigenschaften der Schnappverbindung erbringen müssen. Neben diesen Klemmschenkeln mit den Schnappanschlußelementen sind getrennt angeordnete Fortsätze vorgesehen, mit deren Hilfe die V-förmig gekanteten Ränder von Verkleidungsblechen zwischen den beiden Leisten form- und kraftschlüssig festgelegt werden. Der Flanschsteg der Federleiste
wirkt hier infolge der formschlüssig eingreifenden Fortsätze
als Zugband und ergänzt damit die Kraftaufnahme der Skelettleiste. Aus Federleiste und Skelettleiste wird in montiertem
Zustand ein hohler geschlossener Querschnitt gebildet, der
zur Aufnahme von Verschiebungs- und Verwindungskräften bei
einem Fahrzeugaufbau geeignet ist. In der Symmetrieebene ergibt sich ein Freiraum, so daß die Federleiste durch Auftrennen der Länge nach zu Demontagezwecken zerstört werden kann,
ohne daß die Gefahr besteht, daß hierdurch die Skelettleiste
gleichzeitig beschädigt würde. Durch die starre Ausbildung der
Skelettleiste in Verbindung mit der mehrfach abgewinkelten und
gebogen gestalteten äußeren Kontur der an den Steg anschliessenden Umfangsschenkel ergibt sich der Nachteil, daß ein lotrechter Anschluß, z. B. von Isoliermat-erial im Bereich der
Verkleidungsbleche nicht möglich ist.

Der Erfindung liegt die Aufgabe zugrunde, ein Wand- oder Dachelement der eingangs beschriebenen Art derart weiterzubilden,
daß bei diesem sich die Skelettleiste wie auch die Federleiste
einander funktionell besser ergänzen und bei dem die Skelettleiste und die Förderleiste bei kleinen äußeren Abmessungen
im Sinne hoher Steifheit tief abgekantete Verkleidungsbleche
aufnehmen können.

Erfindungsgemäß wird dies dadurch erreicht, daß die Anschlagschenkel der Skelettleiste getrennt voneinander mit gegenseitigem Abstand von einem Steg an der Skelettleiste ausgehend
vorgesehen und so angeordnet sind, daß der von dem Steg und
zwei Umfassungsschenkeln des Skelettprofils umschlossene Innenraum in drei etwa gleich große Teile unterteilt ist, daß die
Skelettleiste und die Federleiste in an sich bekannter Weise als Strangpreßprofile ausgebildet sind, und daß sowohl die
Klemmschenkel an der Federleiste als auch die Anschlagschenkel
an der Skelettleiste federnd ausgebildet sind und an ihren
freien, in den Innenraum abstehenden Enden die Schnappanschlußelemente tragen. Durch eine solche Ausbildung wird die Federfunktion, die zwischen Skelettleiste und Federleiste erreicht
werden muß, nicht einseitig auf eine Leiste, sondern auf beide
Leisten aufgeteilt. Beide Leisten sind als Strangpreßprofile
ausgebildet und tragen dabei auch zur Festigkeit bei. Durch
die besondere Anordnung der Klemmschenkel und der Anschlagschenkel wird der Innenraum der Skelettleiste unterteilt und
fachwerkartig ausgesteift, so daß Skelettleiste und Federleiste trotz geringerer äußerer Abmessungen zur Aufnahme der auftretenden Kräfte an einem Fahrzeugaufbau geeignet sind. Unerwartet kann bei dieser Ausbildung die Skelettleiste und die
Federleiste im Querschnitt sehr klein gestaltet werden. In
montiertem Zustand kann damit ein Querschnitt von 40 x 25 mm
umschlossen sein, der für andere Zwecke wieder vorteilhaft
ist. Durch die Aufteilung der Federungseigenschaften auf beide
Leisten ergibt sich in fabrikatorischer Hinsicht der Vorteil,
daß insgesamt geringere Toleranzanforderungen an die beiden
Leisten gestellt werden können und sich trotzdem in verbundenem Zustand ein ordnungsgemäßer und fester Sitz der Teile
aneinander ergibt. Überraschend ist weiterhin, daß trotz
der geringen äußeren Querschnittsabmessungen auch sehr tief
abgekantete Verkleidung-sbleche aufgenommen werden können,
wobei diese tiefe Abkantung der Verkleidungsbleche zu deren
Stabilität beiträgt. Die Außenkontur der Skelettleiste kann
ohne Weiteres winklig und parallel gewählt werden. was von
Vorteil für Anschlüsse auf der Fahrzeuginnenseite ist. Daneben wird durch die erfindungsgemäße Ausbildung auch der beim
Stand der Technik schon bekannte Vorteil der form- und kraftschlüssigen Abstützung der Teile aneinander beibehalten.

0105962

Die Anschlagschenkel der Skelettleiste können von der etwa
rechtwinklig ausgebildeten Verbindungsecke zwischen Steg und
Umfangsschenkel in Richtung auf die Symmetrieebene abgerückt
vom Steg ausgehend vorgesehen sein, wobei die Umfangsschenkel
der Skelettleiste und der Rand der gekanteten Verkleidungsbleche etwa gleiche Tiefe aufweisen. Diese Ausbildung gestattet es, die Ränder der Verkleidungsbleche sehr tief abzukanten und trotzdem in der Skelettleiste vollständig aufzunehmen,
obwohl die Skelettleiste eine Tiefe in etwa gleicher Größenordnung besitzt. Durch die Materialanhäufung zwischen Umfangsschenkel, der Skelettleiste, Rand des Verkleidungsbleches und
Klemmschenkel der Federleiste wird eine äußerst stabile Ausbildung in den Eckbereichen erzielt.

Die Klemmschenkel der Federleiste können über einen Flanschsteg miteinander verbunden sein, wobei dieser Flanschsteg aussen eine in Richtung auf den Rand des Verkleidungsbleches abstehende Rippe aufweist. Hierdurch wird das äußere Ansehen eines
derart erstellten Fahrzeugaufbaus begünstigt. Die Fläche des
Flanschsteges außen liegt mit der Oberfläche der Verkleidungsbleche in einer Ebene. Zwischen den beiden Teilen ergeben sich
keine tiefen sichtbaren Spalte, so daß beim Lackieren der Vorteil auftritt, daß bei Brückenbildung im Lack kein Lufteinschluß
erfolgt, so daß die Gefahr der Rißbildung bei Bewegungen stark
gemindert ist.

Die Anschlagschenkel können ausgehend von dem Steg an der Skelettleiste zunächst einen schräggestellten Teil zur Aufnahme
des Kantenbereiches des Randes von Verkleidungsblechen und anschließend einen parallel zur Symmetrieebene ausgerichteten
Teil aufweisen, womit eindeutig zwischen den funktionellen
Aufgaben der Anschlagschenkel unterschieden ist, nämlich einmal zum Festhalten des V-förmig umgebogenen Randes der Verkleidungsbleche und zum anderen zur Verankerung der Federleiste an der Skelettleiste und umgekehrt. Die Gestaltung der
Federleiste und der Skelettleiste ist so getroffen, daß auch

0105962

das Strangpreßwerkzeug für die beiden Leisten mit günstigen geometrischen Abmessungen ausgebildet werden kann.

Die Klemmschenkel der Federleiste können ausgehend von dem Flanschsteg zunächst einen dickwandigeren Teil zum Einklemmen des Randes der Verkleidungsbleche an dem Umfangsschenkel der Skelettleiste und anschließend einen dünnwandigeren federnden Teil aufweisen. Die Klemmschenkel besitzen damit eine erhebliche axiale Länge, die die Tiefe der Leisten übersteigt.

Die Erfindung wird anhand eines bevorzugten Ausführungsbeispieles weiter beschrieben. Es zeigen:

Fig. 1     einen Querschnitt durch die wesentlichen Teile des Wand- oder Deckenelementes,

Fig. 2     einen Querschnitt durch die Skelettleiste   und

Fig. 3     einen Querschnitt durch die Federleiste.

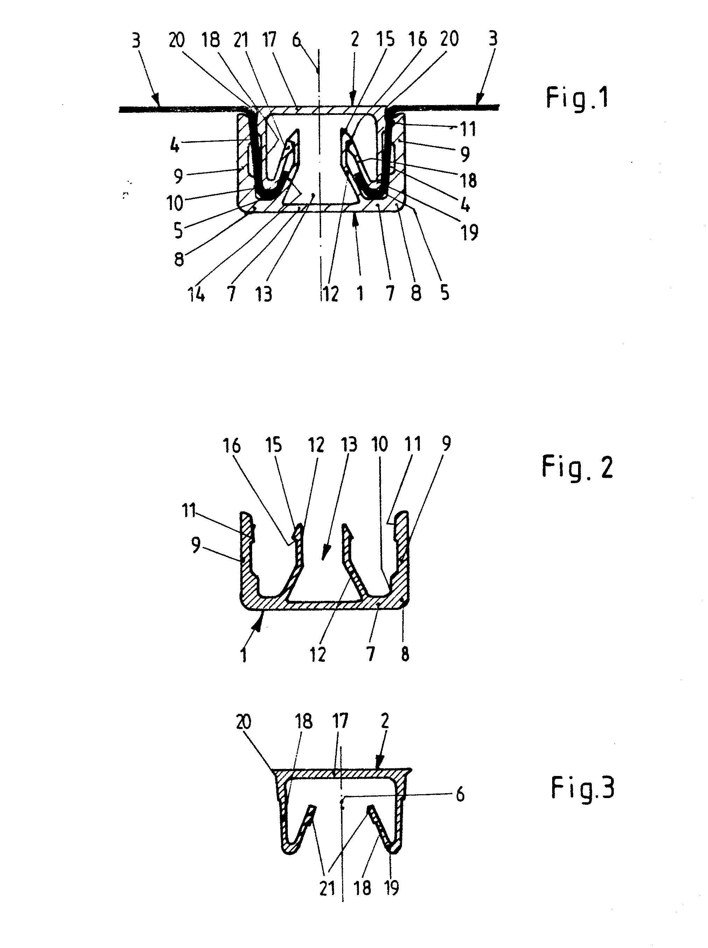

Der in Fig. 1 dargestellte Horizontalschnitt, beispielsweise durch einen Fahrzeugaufbau zeigt die drei wesentlichen Teile des Rand- und Deckenelementes, nämlich eine Skelettleiste 1, eine Federleiste 2 und ein Verkleidungsblech 3. Je eine Federleiste und eine Skelettleiste bilden zusammen einen Posten oder Steher. Mehrere Steher sind in Abständen zueinander angeordnet und bilden somit eine Gerippekonstruktion des Fahrzeugaufbaus. Zwischen diesen Stehern erstrecken sich jeweils Verkleidungsbleche 3, die an beiden Längskanten in symmetrischer Weise im Bereich eines Randes 4 V-förmige Abknickungen 5 aufweisen. Sämtliche Teile sind spiegelbildlich zu der Symmetrieebene 6 ausgebildet.

0105962

Die Skelettleiste 1 besitzt einen Steg 7, an dessen Enden über je eine ausgebildete Verbindungsecke 8 Umfangsschenkel 9 anschließen, die an ihrer Innenseite zwei Auflager 10 und 11 für den Rand 4 der Verkleidungsbleche 3 aufweisen. Die äußere Kontur des Steges 7 und der Umfangsschenkel 9, die auf den Innenraum des Fahrzeugaufbaus hin gerichtet ist, ist eben und winklig begrenzt, was für die weitere Ausbildung der Fahrzeugwand, beispielsweise für die Anbringung von Isolierstoffen, vorteilhaft ist. Die Skelettleiste weist von den Verbindungsecken 8 nach innen am Steg 7 in Richtung auf die Symmetrieebene 6 versetzt angeordnete Anschlagschenkel 12 auf, die sich aus einem schräggestellten Teil und je einem Teil parallel zu der Symmetrieebene 6 zusammensetzen, wobei die Anschlagschenkel 12 innerhalb eines von den Umfangsschenkeln 9 und dem Steg 7 umschlossenen Innenraum 13 so angeordnet sind, daß sie einerseits mit Abstand zu der Symmetrieebene 6 vorgesehen sind und andererseits etwa drei gleich große Querschnittsflächen von dem Innenraum 13 abgeteilt bzw. gebildet werden. Der schrägstehend angeordnete Teil der Anschlagschenkel 12 dient der Aufnahme eines Kantenbereiches 14 des Randes 4 des jeweils anschließenden Verkleidungsbleches 3. An jedem freien Ende weist der Anschlagschenkel 12 eine Abweisfläche 15 sowie eine hinterschnittene Rippe 16 auf, die mit Teilen der Federleiste 2 zusammenarbeitet.

Die Federleiste 2 besitzt einen Flanschsteg 17, dessen äußere Kontur mit der äußeren Oberfläche der Verkleidungsbleche fluchtet. An beiden Enden des Flanschsteges 17 schließen sich Klemmschenkel 18 an, die V-förmigen Querschnitt aufweisen und in den Innenraum 13 bis tief in Richtung auf den Steg 7 der Skelettleiste 1 hineinreichen. Mit einer Umbiegung 19 greifen diese Klemmschenkel 18 in die V-förmige Abknickung 5 der Verkleidungsbleche 3 ein und legen diese kraft- und formschlüssig an den entsprechenden Gegenflächen der Skelettleiste fest.
Die Klemmschenkel 18 sind im Übergangsbereich im Anschluß an
den Flanschsteg 17 zunächst dickwandiger ausgebildet, um hier
eine steife Ecke zu erzielen und den Rand 4 der Verkleidungsbleche 3 gegen das Auflager 11 zu drücken bzw. einzuklemmen.
Nach außen gerichtet ist hier je eine nasenförmige abstehende
Rippe 20 vorgesehen, die der Kontur des Verkleidungsbleches 3
angepaßt ist, um den notwendigerweise hier entstehenden Spalt
jedoch in seiner Spaltweite möglichst gering und unauffällig
zu gestalten. Außerdem trägt diese Rippe 20 zur Festigkeit in
diesem Eckbereich bei. Der übrige Teil der Klemmschenkel 18
ist vergleichsweise dünnwandiger ausgebildet und federt in
seinem ganzen V-förmigen Querschnittsbereich. Das freie Ende
der Klemmschenkel 18 trägt eine Nockenleiste 21, die mit der
Rippe 16 an den Anschlagschenkeln 12 je ein Schnappanschlußelement 16, 21 bildet bzw. ergibt. Auf die Formgebung im einzelnen,
wie sie aus den Zeichnungen ersichtlich ist, wird gesondert
hingewiesen. Es ist ersichtlich, wie durch die besondere Ausbildung der Klemmschenkel 18 einerseits und der Anschlagschenkel 12 andererseits in Verbindung mit den Umfangsschenkeln 9 u-nd dem Steg 7 erreicht wird, daß nicht nur die Federleiste 2 an der Skelettleiste 1 aufgenommen und die beiden
Leisten miteinander verbunden werden, sondern daß gleichzeitig die kraft- und formschlüssige Verankerung der Verkleidungsbleche 3 im Bereich der Ränder 4 erfolgt. Die Symmetrieebene 6 wird ausschließlich von dem Steg 7 und dem Flanschsteg 17 durchsetzt, so daß hier sehr leicht ein Trennelement
angesetzt werden kann, um beispielsweise die Federleiste 2
der Länge nach aufzuschneiden, wenn es erforderlich ist, zu
Reparaturzwecken, beispielsweise ein eingebeultes Verkleidungsblech (und damit auch die beiden Federleisten 2 zweier benachbarter Steher auszutauschen. Die Montage und Demontage ist
damit klar. Die Querschnittsdarstellungen der Federleiste 2
gemäß Fig. 3 und der Skelettleiste 1 gemäß Fig. 2 lassen die

0105962

besondere Formgebung im einzelnen erkennen und vermitteln auch eine Vorstellung über die Ausgestaltung des Strangpreßwerkzeuges für die jeweilige Leiste, da ja der Querschnitt der jeweiligen Leiste der Ausnehmung im Strangpreßwerkzeug entspricht. Insbesondere Fig. 2 läßt gut erkennen, wie der Innenraum 13 in drei etwa flächengleiche Querschnittsteile unterteilt ist, so daß sich damit und in Verbindung mit den entsprechenden Teilen der Federleiste eine fachwerkartige Aussteifung des Innenraums 13 ergibt. Hierzu reichen die Anschlagschenkel 12 sehr weit nach innen in Richtung auf den Flanschsteg 17 der Federleiste 2 vor.

0105962

Bezugszeichenliste:

 1 = Skelettleiste
 2 = Federleiste
 3 = Verkleidungsblech
 4 = Rand
 5 = V-förmige Abknickung
 6 = Symmetrieebene
 7 = Steg
 8 = Verbindungsecke
 9 = Umfangsschenkel
10 = Auflager
11 = Auflager
12 = Anschlagschenkel
13 = Innenraum
14 = Kantenbereich
15 = Abweisfläche
16 = Rippe
17 = Flanschsteg
18 = Klemmschenkel
19 = Umbiegung
20 = Rippe
21 = Nockenleiste

# BIBRACH & REHBERG   0105962

## ANWALTSSOZIETÄT

BIBRACH & REHBERG, POSTFACH 738, D-3400 GÖTTINGEN

PATENTANWALT DIPL.-ING. RUDOLF BIBRACH
PATENTANWALT DIPL.-ING. ELMAR REHBERG

RECHTSANWÄLTIN MICHAELA BIBRACH-BRANDIS

TELEFON: (0551) 45034/35
TELEX: 96616 bipat d
POSTSCHECKKONTO: HANNOVER
(BLZ 25010030) NR. 115763-301
BANKKONTEN: DEUTSCHE BANK AG GÖTTINGEN
(BLZ 26070072) NR. 01/85900
COMMERZBANK GÖTTINGEN
(BLZ 26040030) NR. 6425722

| IHR ZEICHEN<br>YOUR REF. | IHR SCHREIBEN VOM<br>YOUR LETTER | UNSER ZEICHEN<br>OUR REF. | D-3400 GÖTTINGEN,<br>PÜTTERWEG 6 |
|---|---|---|---|
| | | 11.252/AS5 | 15.09.1982 |

Aluminium Press- und Walzwerk Münchenstein AG,
Tramstr. 56 - 66, CH-4142 Münchenstein 2

Wand- oder Dachelement, insbesondere zur Erstellung von
Fahrzeugaufbauten

## P a t e n t a n s p r ü c h e :

1. Wand- oder Dachelement, insbesondere zur Erstellung von
Fahrzeugaufbauten, mit V-förmig gekanteten Verkleidungsblechen, einer im Querschnitt etwa W-förmigen und Anschlagschenkel aufweisenden Skelettleiste und einer zugehörigen, zwei
V-förmige Klemmschenkel aufweisenden Federleiste, wobei durch
Schnappanschlußelemente zwischen den Anschlagschenkeln der
Skelettleiste und den Klemmschenkeln der Federleiste die Ränder der V-förmig gekanteten Verkleidungsbleche fixiert gehalten und gleichzeitig die Federleiste und die Skelettleiste
unter Selbsthemmung miteinander verbunden sind, dadurch gekennzeichnet, daß die Anschlagschenkel (12) der Skelettleiste (1)
getrennt voneinander mit gegenseitigem Abstand von einem Steg
(7) an der Skelettleiste (1) ausgehend vorgesehen und so angeordnet sind, daß der von dem Steg (7) und zwei Umfassungsschenkeln (8) der Skelettleiste umschlossene Innenraum (13) in etwa drei gleich große Teile unterteilt ist, daß die Skelettleiste (1) und die Federleiste (2) in an sich bekannter Weise
als Strangpreßprofile ausgebildet sind, und daß sowohl die
Klemmschenkel (18) an der Federleiste (2) als auch die Anschlagschenkel (12) an der Skelettleiste (1) federnd ausgebildet sind und an ihren freien, in den Innenraum (13) abstehenden Enden die Schnappanschlußelemente (16, 21) tragen.

2. Wand- oder Dachelement nach Anspruch 1, dadurch gekennzeichnet, daß die Anschlagschenkel (12) der Skelettleiste (1)
von der etwa rechtwinklig ausgebildeten Verbindungsecke (8)
zwischen Steg (7) und Umfangsschenkel (9) in Richtung auf die
Symmetrieebene (6) abgerückt vom Steg (7) ausgehend vorgesehen
sind, und daß die Umfangsschenkel (9) der Skelettleiste (1)
und der Rand (4) der gekanteten Verkleidungsfläche (3) etwa
gleiche Tiefe aufweisen.

3. Wand- oder Dachelement nach Anspruch 1 oder 2, dadurch gekennzeichnet, daß die Klemmschenkel (18) der Federleiste (2)
über einen Flanschsteg (17) miteinander verbunden sind, und
daß dieser Flanschsteg (17) außen eine in Richtung auf den
Rand der Verkleidungsbleche (3) abstehende Rippe (20) aufweist.

4. Wand- oder Dachelement nach Anspruch 2, dadurch gekennzeichnet, daß die Anschlagschenkel (12) ausgehend von dem Steg (7)
an der Skelettleiste (1) zunächst einen schräggestellten Teil
zur Aufnahme des Kantenbereiches des Randes (4) der Verkleidungsbleche (3) und anschließend einen parallel zu der Symmetrieebene (6) ausgerichteten Teil aufweisen.

- 3 -   0105962

5. Wand- oder Dachelement nach Anspruch 3, dadurch gekennzeichnet, daß die Klemmschenkel (18) der Federleiste (2) ausgehend von dem Flanschsteg (17) zunächst einen dickwandigeren Teil zum Einklemmen des Randes (4) der Verkleidungsbleche (3) an dem Umfangsschenkel (9) der Skelettleiste (1) und anschliessend einen dünnwandigeren federnden Teil aufweisen.

0105962

1 / 1

Fig.1

Fig. 2

Fig.3

0105962

Nummer der Anmeldung

EP 82 10 9570

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,A | DE-C- 878 124 (ALUMINIUM-INDUSTRIE) * Ganzes Dokument * | 1 | B 62 D 27/02 |
| | --- | | |
| D,A | EP-B-0 008 592 (VEREINGITE METALLWERKE RANSHOFEN-BERNDORF) | | |
| | ----- | | |

RECHERCHIERTE
SACHGEBIETE (Int. Cl. ³)

B 62 D 25/00
B 62 D 27/00

Der vorliegende Recherchenbericht wurde für alle Patentansprüche erstellt.

| Recherchenort BERLIN | Abschlußdatum der Recherche 25-05-1983 | Prüfer LUDWIG H J |
|---|---|---|